# EUROPÄISCHE PATENTANMELDUNG

(11) **EP 1 072 306 A1**
(43) Veröffentlichungstag der Anmeldung: **31.01.2001**
(21) Anmeldenummer: 00115599.3
(22) Anmeldetag: 19.07.2000
(51) Int. Cl.: B01F 5/02, A23L 2/54

(54) **Verfahren und Vorrichtung zum Imprägnieren von Flüssigkeiten mit Gasen**

(30) Priorität: 26.07.1999 DE 19935010
(71) Anmelder: Linde Gas AG, 82049 Höllriegelskreuth (DE)
(72) Erfinder: Schmidtke, Wolfgang, 33102 Paderborn (DE)
(74) Vertreter: Kasseckert, Rainer

(57) **Zusammenfassung**

Die Erfindung betrifft ein Verfahren und eine Vorrichtung zur Imprägnierung von Flüssigkeiten mit Gasen. Das Gas, z.B. Kohlendioxid, wird strahlförmig (11) mit einer Gasstrahlgeschwindigkeit von mindestens 20 m/s in die beispielsweise in einem Reaktor (1) befindliche Flüssigkeit eingetragen. Dabei wird das Gas vorzugsweise unter hohem Druck derart in die Flüssigkeit eingespeist, daß eine spiralförmige Strömung in der Flüssigkeit entsteht. Zusätzlich kann ein Rotationsgasabscheider (2) durch den Gaseintrag angetrieben werden, der für eine Gasblasenseparierung sorgt.

## Beschreibung

Die Erfindung betrifft ein Verfahren zur Imprägnierung von Flüssigkeiten mit einem Gas sowie eine Vorrichtung zur Durchführung des Verfahrens.

Zur Herstellung einer mit einem Gas angereicherten Flüssigkeit ist es bekannt, das Gas z.B. mittels Rührer oder statischer Mischer mit der Flüssigkeit zu vermischen und das Gas in der Flüssigkeit zu lösen. Beispielsweise wird in der Getränkeindustrie Kohlendioxid in Getränke eingebracht, um ein vom Kunden gewünschtes perlendes Getränk zu erzeugen. Zur Herstellung von Sprudelwasser sind auch schon Geräte für den Haushalt auf dem Markt, bei denen herkömmliches Trinkwasser mit Kohlendioxid aus einer Kohlendioxidgasflasche versetzt wird. Es sind auch bereits Verfahren vorgeschlagen worden, bei denen das Kohlendioxid unmittelbar vor der Abgabe des Trinkwassers über einen Wasserhahn in eine vom Trinkwasserleitungsnetz abzweigende Wasserleitung eingetragen wird, um kohlendioxidangereichertes Trinkwasser direkt aus dem Wasserhahn entnehmen zu können.

Bei all diesen Verfahren besteht eine Schwierigkeit dann, ausreichende Mengen Kohlendioxid in der Flüssigkeit zur Lösung zu bringen. Da dies insbesondere bei Haushaltsgeräten aufgrund begrenzter Platzverhältnisse, welche die zur Verfügung stehende Reaktionsstrecke zum Vermischen von Gas und Flüssigkeit einschränken, nicht immer erfüllt werden kann, kommt es häufig zu grobblasigem Gasaustrag aus der Flüssigkeit. Dies ist vor allem bei Getränken unerwünscht. Der vorliegenden Erfindung liegt die Aufgabe zugrunde, ein Verfahren und eine Vorrichtung zur Imprägnierung von Flüssigkeiten mit einem Gas zur Verfügung zu stellen, mit denen auf wirtschaftliche Weise eine weitgehende Lösung von Gas in der Flüssigkeit erreicht wird.

Diese Aufgabe wird erfindungsgemäß verfahrensseitig dadurch gelöst, daß das Gas strahlförmig mit einer Gasstrahlgeschwindigkeit von mindestens 20 m/s in die Flüssigkeit eingetragen wird.

Vorzugsweise wird das Gas mit einer Gasstrahlgeschwindigkeit von mehr als 25 m/s, besonders bevorzugt mehr als 30 m/s, in die Flüssigkeit eingetragen. Für die überwiegende Zahl der Anwendungsfälle sind Gasstrahlgeschwindigkeiten von 25-40 m/s, insbesondere 30-35 m/s, vorgesehen.

Zur Erzeugung der hohen Gasstrahlgeschwindigkeiten wird das Gas zweckmäßigerweise mittels Hochdruckinjektion im Druckbereich von 5-80 bar, insbesondere mindestens 10 bar, in die Flüssigkeit injiziert. Als besonders bevorzugt wird ein Druckbereich von 20-60 bar angesehen. Aufgrund der durch die Hochdruckeinspeisung erzielten hohen Gasstrahlgeschwindigkeit wird eine hohe kinetische Energie mittels des Gasstrahls in die Flüssigkeit eingebracht. Die Gasstrahlkinetik bewirkt einen guten Stoffaustausch bezüglich Verteilung und Lösung des Gases in der Flüssigkeit. Auf diese Weise wird eine besonders effektive Imprägnierung der Flüssigkeit mit dem Gas erreicht; insbesondere bei Anwendung des Verfahrens zur Imprägnierung von Getränken erhält man ein besonders feinperliges Getränk, das vom Verbraucher aufgrund des sog. Sekt-Feelings so sehr geschätzt wird.

Üblicherweise befindet sich die Flüssigkeit in einem Behälter, wobei das Gas bevorzugt derart in die Flüssigkeit eingebracht wird, daß in der Flüssigkeit eine spiralförmige Strömung induziert wird. Dies kann z.B. dadurch erreicht werden, daß das Gas tangential zur Behälterwand in die im Behälter befindliche Flüssigkeit eingetragen wird. Außerdem empfiehlt es sich, das Gas in einem Winkel von 10-30°, insbesondere ca. 15°, gegen die Horizontale nach unten geneigt in die Flüssigkeit einzustrahlen. Auf diese Weise wird ein Drehimpuls auf die Flüssigphase übertragen, der den dispers verteilten Gasanteil in eine Spiralbahn lenkt, wodurch eine längere Verweilzeit zur Gaslösung gegeben ist.

Gemäß einer Weiterbildung des Erfindungsgedankens wird durch das eingetragene Gas ein Rotationsgasabscheider angetrieben. Dieser kann z.B. aus rotierenden Blechen bestehen, welche aufgrund der Gasstrahlkinetik in Rotation gebracht werden und in einer Flüssigkeit noch enthaltene Gasblasen durch den Zentrifugaleffekt in die darüberliegende Reaktions- und Sättigungskammer ableiten. Dadurch wird eine blasenfreie gesättigte Flüssigphase erzeugt und zum Verbraucher geführt.

Eine besonders zweckmäßige Ausgestaltung der Erfindung sieht vor, die Flüssigkeit in einem Behälter bei einem vorgegebenen Druck zu halten, wobei bei Entnahme von imprägnierter Flüssigkeit aus dem Behälter der dadurch absinkende Druck registriert und daraufhin frische Flüssigkeit und Gas dem Behälter so lange zugeführt wird, bis die vorgegebene Füllmenge und der Druck wieder erreicht sind. Mit dieser Methode wird eine Automatisierung des Imprägniervorgangs ermöglicht. Eine Abgabe von imprägnierter Flüssigkeit aus dem Behälter ist somit chargenweise oder kontinuierlich möglich.

Die Erfindung betrifft ferner eine Vorrichtung zur Imprägnierung von Flüssigkeiten mit Gas und einer Gaseintragseinrichtung.

Vorrichtungsseitig wird die gestellte Aufgabe erfindungsgemäß dadurch gelöst, daß die Gaseintragseinrichtung als Gasstrahlinjektor ausgebildet ist, der auf eine Gasstrahlgeschwindigkeit von mindestens 20 m/s ausgelegt ist.

Bevorzugt ist der Gasstrahlinjektor auf eine Gasstrahlgeschwindigkeit von mindestens 25 m/s, besonders bevorzugt mindestens 30 m/s, ausgelegt.

Für die überwiegende Zahl der Anwendungsfälle ist eine Auslegung des Gasstrahlinjektors auf eine Gasstrahlgeschwindigkeit von 25-40 m/s, insbesondere 30-35 m/s, vorgesehen.

Der Gasstrahlinjektor ist vorteilhafterweise derart ausgerichtet, daß in der Flüssigkeit eine spiralförmige Strömung induziert wird. Beispielsweise ist der Gasstrahlinjektor tangential zur Behälterwand des für die Aufnahme der Flüssigkeit vorgesehenen Behälters ausgerichtet. Darüber hinaus ist eine Ausrichtung des Gasstrahlinjektors in einem Winkel von 10-30°, insbesondere ca. 15°, gegen die Horizontale nach unten geneigt vorteilhaft.

Eine Weiterbildung des Erfindungsgedankens sieht vor, daß der Gasstrahlinjektor auf einen im Behälter angeordneten Rotationsgasabscheider derart gerichtet ist, daß dieser durch den Gasstrahl in Rotation versetzt werden kann. Durch dieses Vorrichtungsmerkmal ist die Erzeugung einer blasenfreien gesättigten Flüssigphase möglich.

Zur Erzeugung eines Gasstrahls mit hoher Geschwindigkeit und hoher kinetischer Energie ist der Gasstrahlinjektor zweckmäßigerweise mit einer Hochdruckgasversorgungseinrichtung verbunden, die für einen Druckbereich von 5-80 bar, insbesondere mindestens 10 bar, ausgelegt ist. Für die überwiegende Zahl der Anwendungsfälle ist eine Auslegung auf einen Druckbereich von 20-60 bar vorgesehen.

Mit der Erfindung wird eine deutliche Verbesserung des Gaseintrags, insbesondere des CO₂-Eintrags, in Wasser oder andere Flüssigkeiten zur Druckimprägnierung im Bereich kleiner oder größerer Leistungsebenen einschließlich chargenweiser oder kontinuierlicher Abgabe zum Verbraucher erzielt. Bei der Kohlendioxidimprägnierung von Getränken wird das subjektive Geschmacksempfinden deutlich verbessert, da die erfindungsgemäß imprägnierten Getränke vom Verbraucher als feinperlig (Sekt-Feeling) bezeichnet werden können.

Die erfindungsgemäße Vorrichtung kann aus funktionssicheren und verschleißarmen Bauelementen aufgebaut werden.

Mit der Erfindung wird ein hoher Imprägnierungsgrad auch ohne Zusatzkühlung bis zu einer Temperatur von ca. 25°C ermöglicht. Erfindungsgemäß hergestellte Mineral- und Heilwässer mit feinperligen Gasanteilen wirken sich physiologisch günstiger auf den Organismus aus. Geschmacksträger werden außerdem sensorisch besser wahrgenommen. Lästiger Magendruck durch Gasaustausch nach dem Trinken wird weitgehend vermieden. Heil- und Kurwässer lassen sich vorort schnell und sicher portionsweise oder kontinuierlich im Thekenbereich mit Kohlendioxidimprägnierung herstellen, insbesondere bei Trinktemperaturen bis 25°C. Auch die Aufbereitung von Sprudelbädern mit höheren Wassertemperaturen und hohem Kohlendioxidimprägnierungsgrad ist möglich. Dadurch wird eine dichtere Kohlendioxid-Feinblasen-Belegung der Haut und somit eine bessere physiotherapeutische Wirkung im Hinblick auf die Durchblutung erreicht.

Außer der Anwendung zur Gasanreicherung von Getränken eignet sich die Erfindung auch für andere, insbesondere industrielle Einsätze. Z.B. kann die Erfindung zum Gaseintrag in Mischreaktoren, insbesondere für die Gas-Öl-Aufbereitung, verwendet werden. Ein anderes Anwendungsbeispiel ist die Modifizierung von Brennstoffen, insbesondere Diesel/Wasserstoff.

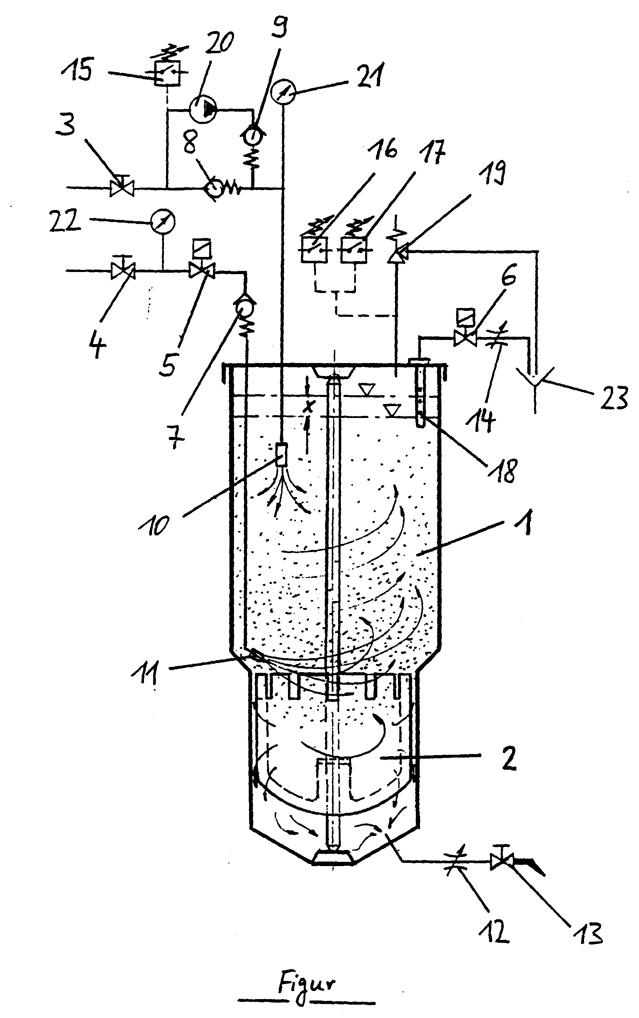

Im folgenden soll die Erfindung anhand eines in der Figur schematisch dargestellten Ausführungsbeispiels näher erläutert werden:

Dem nachstehenden Positions-Teileplan sind die Bezeichnungen der einzelnen Positionen der Figur zu entnehmen:

| | |
|---|---|
| 1 | Reaktor/Druckgefäß |
| 2 | Rotations-Gasabscheider |
| 3 | Hauptabsperrventil; H₂O oder Flüssigphase |
| 4 | Hauptabsperrventil; CO₂-Gas |
| 5 | Magnetventil; CO₂-Gas |
| 6 | Magnetventil; Steuerabgas |
| 7 | Rückschlagventil; CO₂-Einspeisung |
| 8 | Rückschlagventil; H₂O-Einspeisung |
| 9 | Rückschlagventil; Pumpendruck-Rücklaufsicherung |
| 10 | H₂O-Einlauf-Verteilerdüse |
| 11 | CO₂-Expansionsdüse |
| 12 | Wasserauslauf-Drosselventil |
| 13 | Auslaufhahn |
| 14 | Druckhaltedrosselventil |
| 15 | Druckschalter; Druckabfallkontrolle |
| 16 | Hysterese-Druckschalter; Systemsteuerung |
| 17 | Druckschalter; Systemabschaltung unter 3 bar |
| 18 | Tauchrohrsonde; Staudruckeinstellung für Pos. 16 |
| 19 | Überström-Sicherheitsventil |
| 20 | Druckerhöhungspumpe (Zusatzfunktion) |
| 21 | Kontrollmanometer 0-10 bar |
| 22 | Kontrollmanometer 0-100 bar |
| 23 | Ableitung; Ablaufanschluß oder Sammelbehälter |

Das Ausführungsbeispiel betrifft die Ausgestaltung einer Imprägnieranlage mit CO₂-Hochdruckinjektion im Druckbereich bis ca. 60 bar, über eine tangential angeordnete Düse, wobei der System-Anlagedruck bis ca. 8 bar über einen Hysterese-Druckschalter Pos. 16 eingestellt werden kann. Durch die Hochdruckeinspeisung wird eine Gasstrahlgeschwindigkeit (Eintragsgeschwindigkeit) von ca. 30-35 m/s erreicht. Die Gasstrahlkinetik bewirkt einen guten Stoffaustausch bezüglich Verteilung und Lösung von Gas in Flüssigkeiten. Zusätzlich wird durch die tangential angeordnete und in Neigung von ca. 15° nach unten gerichtete Düse Pos. 11 oder Düseneinheit ein Drehimpuls auf die Flüssigphase übertragen, der den dispers verteilten Gasanteil in eine Spiralbahn lenkt, wodurch eine längere Verweilzeit zur Gaslösung gegeben ist. Als weitere Funktion infolge der Gasstrahldynamik wird ein Rotations-Gasabscheider Pos. 2 angetrieben, der in Ausbildung und Wirkung eine blasenfreie gesättigte Flüssigphase am Auslaufhahn (Verbraucher) Post. 13 garantiert. Das Druckhalte- oder Drosselventil wird entsprechend dem unteren Schaltpunkt von Pos. 16 eingestellt. Bei Flüssigentnahme über Pos. 13 sinkt der Systemdruck, so daß über Pos. 16 Pos. 5 und Pos. 6 öffnen und über Pos. 10 und 11 Flüssigkeit und Gas zugeführt werden. Nach Schließen des Verbrauchers Pos. 13 wird Flüssigkeit entsprechend der Fülldifferenz (Bereich x) so lange zugeführt, bis über die Tauchsonde Pos. 18 ein Kopfraumgasanteil über Pos. 6 und Pos. 14 abgeleitet ist und durch Eindringen eines geringen Flüssigkeitsanteils aus dem System in die Kapillarbohrungen der Tauchsonde der Druck im System bis zum oberen Schaltpunkt von Pos. 16 angehoben wird; Pos. 5 und Pos. 6 werden geschlossen. Dieser Vorgang wiederholt sich nach Öffnung und Schließung des Verbrauchers Pos. 13.

Pos. 17 dient der Überwachung des unteren zulässigen Systemdruckes und schaltet bei Druckabfall, z.B. Einstellung auf 3 bar, das gesamte System ab. Pos. 15 schaltet bei Versorgungsdruckabfall mit Pos. 17 das System ab. Pos. 20 wird eingebaut und zugeschaltet bei größeren und im Druck bis ca. 8 bar liegenden Systemen (Industrieausführung).

## Patentansprüche

1. Verfahren zur Imprägnierung von Flüssigkeiten mit einem Gas, **dadurch gekennzeichnet**, daß das Gas strahlförmig mit einer Gasstrahlgeschwindigkeit von mindestens 20 m/s in die Flüssigkeit eingetragen wird.

2. Verfahren nach Anspruch 1, **dadurch gekennzeichnet**, daß das Gas mit einer Gasstrahlgeschwindigkeit von 25-40 m/s, insbesondere 30-35 m/s, in die Flüssigkeit eingetragen wird.

3. Verfahren nach Anspruch 1 oder 2, **dadurch gekennzeichnet**, daß das Gas derart in die Flüssigkeit eingebracht wird, daß in der Flüssigkeit eine spiralförmige Strömung entsteht.

4. Verfahren nach einem der Ansprüche 1 bis 3, **dadurch gekennzeichnet**, daß das Gas tangential zur Behälterwand in die in einem Behälter befindliche Flüssigkeit eingetragen wird.

5. Verfahren nach Anspruch 4, **dadurch gekennzeichnet**, daß das Gas in einem Winkel von 10-30°, insbesondere ca. 15°, gegen die Horizontale nach unten geneigt in die in einem Behälter befindliche Flüssigkeit eingetragen wird.

6. Verfahren nach einem der Ansprüche 1 bis 5, **dadurch gekennzeichnet**, daß durch das eingetragene Gas ein Rotationsgasabscheider angetrieben wird.

7. Verfahren nach einem der Ansprüche 1 bis 6, **dadurch gekennzeichnet**, daß das Gas mittels Hochdruckinjektion im Druckbereich von 5-80 bar, insbesondere mindestens 10 bar, in die Flüssigkeit eingetragen wird.

8. Verfahren nach Anspruch 7, **dadurch gekennzeichnet**, daß das Gas mittels Hochdruckinjektion im Druckbereich von 20-60 bar in die Flüssigkeit eingetragen wird.

9. Verfahren nach einem der Ansprüche 1 bis 8, **dadurch gekennzeichnet**, daß die Flüssigkeit in einem Behälter bei einem vorgegebenen Druck gehalten wird, wobei bei Entnahme von imprägnierter Flüssigkeit aus dem Behälter der dadurch absinkende Druck registriert und daraufhin frische Flüssigkeit dem Behälter so lange zugeführt wird, bis die vorgegebene Füllmenge und der Druck wieder erreicht sind.

10. Verfahren nach Anspruch 9, **dadurch gekennzeichnet**, daß ein Druck im Bereich von 3-8 bar vorgegeben wird.

11. Vorrichtung zur Imprägnierung von Flüssigkeiten mit einem Gas, wobei die Vorrichtung eine Gaseintragseinrichtung aufweist, **dadurch gekennzeichnet**, daß die Gaseintragseinrichtung als Gasstrahlinjektor ausgebildet ist, der auf eine Gasstrahlgeschwindigkeit von mindestens 20 m/s ausgelegt ist.

12. Vorrichtung nach Anspruch 12, **dadurch gekennzeichnet**, daß der Gasstrahlinjektor auf eine Gasstrahlgeschwindigkeit von 25-40 m/s, insbesondere 30-35 m/s, ausgelegt ist.

13. Vorrichtung nach Anspruch 11 oder 12, **dadurch gekennzeichnet**, daß der Gasstrahlinjektor so ausgerichtet ist, daß in der Flüssigkeit eine spiralförmige Strömung entsteht.

14. Vorrichtung nach einem der Ansprüche 11 bis 13, wobei zur Aufnahme der Flüssigkeit ein Behälter mit einer Behälterwand vorgesehen ist, **dadurch gekennzeichnet**, daß der Gasstrahlinjektor tangential zur Behälterwand ausgerichtet ist.

15. Vorrichtung nach Anspruch 14, **dadurch gekennzeichnet**, daß der Gasstrahlinjektor in einem Winkel von 10-30°, insbesondere ca. 15°, gegen die Horizontale nach unten geneigt ausgerichtet ist.

16. Vorrichtung nach einem der Ansprüche 11 bis 15, **dadurch gekennzeichnet**, daß der Gasstrahlinjektor in Richtung auf einen Rotationsgasabscheider ausgerichtet ist.

17. Vorrichtung nach einem der Ansprüche 11 bis 16, **dadurch gekennzeichnet**, daß der Gasstrahlinjektor mit einer Hochdruckgasversorgung in Verbindung steht, die auf einen Druckbereich von 5-80 bar, insbesondere mindestens 10 bar, ausgelegt ist.

18. Vorrichtung nach Anspruch 17, **dadurch gekennzeichnet**, daß die Hochdruckgasversorgung auf einen Druckbereich von 20-60 bar ausgelegt ist.
